# EUROPÄISCHE PATENTANMELDUNG

(11) **EP 1 122 000 A1**
(43) Veröffentlichungstag der Anmeldung: **08.08.2001**
(21) Anmeldenummer: 00101993.4
(22) Anmeldetag: 02.02.2000
(51) Int. Cl.: B21F 35/02, F16F 1/12

(54) **Verfahren zur Herstellung einer Torsionsfederanordnung und Torsionsfederanordnung**

(71) Anmelder: Société Alsacienne pour la Transformation de l'Acier S.a.r.l., 67590 Schweighouse sur Moder (FR)
(72) Erfinder: Schroer, Bernt, Dr., 33442 Herzebrock-Clarholz (DE)
(74) Vertreter: Patentanwälte Rehberg + Hüppe

(57) **Zusammenfassung**

Zur Herstellung einer Torsionsfederanordnung mit einer langgestreckten, aus Federstahldraht (2) gewickelten oder gewundenen und eine hohe Windungszahl aufweisenden Torsionsfeder (1) und einer in dem freien Querschnitt der Torsionsfeder (1) angeordneten Trägerhülse für die Torsionsfeder (1) zur Unterdrückung von Verwerfungen der auf Torsion beanspruchten Torsionsfeder, wird ein Rohrabschnitt (16) in die Torsionsfeder (1) eingebracht, wobei der Außendurchmesser (24) des Rohrabschnitts (1) zumindest über einen Teilbereich seiner Längserstreckung so auf den Innendurchmesser (7) der Torsionsfeder (1) abgestimmt wird, daß der minimale Innendurchmesser, den die Torsionsfeder (1) in ihrer Verwendung erreicht, größer ist als der Außendurchmesser (24) des Rohrabschnitts (16). Der Rohrabschnitt (16) wird coaxial in der Torsionsfeder (1) angeordnet, und in einen freien Ringraum (17) zwischen der Torsionsfeder (1) und dem darin coaxial angeordneten Rohrabschnitt (16) wird mindestens eine Substanz (19, 21) eingebracht, die einen elastisch verformbaren Mantel (18) um den Rohrabschnitt (15) ausbildet, welcher von innen an der Torsionsfeder (1) anliegt.

## Beschreibung

Die Erfindung bezieht sich auf ein Verfahren zur Herstellung einer Torsionsfederanordnung mit einer langgestreckten, aus Federstahldraht gewickelten oder gewundenen und eine hohe Windungszahl aufweisenden Torsionsfeder und einer in dem freien Querschnitt der Torsionsfeder angeordneten Trägerhülse für die Torsionsfeder zur Unterdrückung von Verwerfungen der auf Torsion beanspruchten Torsionsfeder, wobei ein Rohrabschnitt in die Torsionsfeder eingebracht wird. Weiterhin bezieht sich die Erfindung auf eine Torsionsfederanordnung mit einer langgestreckten, aus Federstahldraht gewickelten oder gewundenen und eine hohe Windungszahl aufweisenden Torsionsfeder und eine in dem freien Querschnitt der Torsionsfeder angeordneten Trägerhülse für die Torsionsfeder zur Unterdrückung von Verwerfungen der auf Torsion beanspruchten Torsionsfeder, wobei die Trägerhülse einen harten Hülsenkern aufweist.

Torsionsfedern werden beispielsweise zum Ausgleich von Gewichtskräften bei Sektionaltoren verwendet, die im zunehmenden Maße als Garagen- und Industrietore Verwendung finden.

Die Grundform von gewickelten oder gewundenen Torsionsfedern ist zylindrisch. Solche Torsionsfedern können auf einen Rohrabschnitt als Trägerhülse aufgeschoben werden, um Verwerfungen der auf Torsion beanspruchten Torsionsfeder zu unterdrücken. Allerdings ergibt sich allein durch das Einschieben des Rohrabschnitts in die Torsionsfeder noch keine einfach zu handhabende Baueinheit, da der Rohrabschnitt ohne zusätzliche Sicherungsmaßnahmen bei Handhabungen der Torsionsfederanordnung vor ihrer Installation leicht herausfällt.

Aus der EP 965 399 A2 ist es bekannt, beim Winden einer spiralförmigen Torsionsfeder die Federenden mit kleinerem Innnendurchmesser zu winden als den dazwischen liegenden Hauptbereich der Torsionsfeder. Dies ermöglicht es, bei spiralförmigen Torsionsfedern für unterschiedliche Beanspruchungen die Federenden jeweils mit gleichem Innendurchmesser zu winden, so daß gleiche Befestigungselemente zur Anwendung kommen können und beispielsweise auch eine einheitliche Länge der Torsionsfedern unabhängig von ihrer Beanspruchung realisierbar ist. Die Abstimmung der Torsionsfedern auf die jeweilige Beanspruchung erfolgt über den zwischen den Federenden liegenden Hauptbereich der Torsionsfedern. Bei solchen Torsionsfedern mit konisch eingezogenen Federenden ist es aber schwierig, auch den Hauptbereich zwischen den Federenden mit einer Trägerhülse radial abzustützen. In der EP 965 399 A2 wird hierzu vorgeschlagen, bereits beim Winden der spiralförmigen Torsionsfeder einen Stützkörper in Form eines Rohrabschnitts in den Hauptbereich der Torsionsfeder einzubringen. Nach dem Winden des zweiten Federendes ist dieser Stützkörper durch die beiden konisch eingezogenen Federenden in der Torsionsfeder fixiert. Es stellt sich jedoch als aufwendig heraus, den Stützkörper tatsächlich bereits während des Windens der Torsionsfeder einzubringen. Darüberhinaus muß ein zweiter Rohrabschnitt nach dem Winden der Torsionsfeder durch die Federenden und durch den ersten Rohrabschnitt hindurch in die Torsionsfeder eingebracht werden, um auch die Federenden abzustützen.

Dabei sollte dieser zweite Rohrabschnitt möglichst wenig Spiel zu dem ersten Rohrabschnitt aufweisen. Dies behindert aber sein einfaches Einbringen in die Torsionsfeder mit dem ersten Rohrabschnitt.

In jedem Fall ist der Außendurchmesser einer harten Trägerhülse für die Torsionsfeder so auf den Innendurchmesser der Torsionsfeder abzustimmen, daß der minimale Innendurchmesser, den die Torsionsfeder in ihrer Verwendung erreicht, nicht kleiner ist als der Außendurchmesser der Trägerhülse, damit die Trägerhülse die Funktion der Torsionsfeder nicht beeinträchtigt. Dies bedeutet aber umgekehrt, daß zwischen dem Innendurchmesser der Torsionsfeder und dem Außendurchmesser der Trägerhülse normalerweise immer ein Freiraum verbleibt. Mit anderen Worten hat die Torsionsfeder Spiel auf der Trägerhülse. Dies kann zu unerwünschten Geräuschentwicklungen und unerwünschtem Verwerfungen im Bereich der Torsionsfederanordnung führen.

Der Erfindung liegt die Aufgabe zugrunde, ein Verfahren der eingangs beschriebenen Art zur Herstellung einer Torsionsfederanordnung aufzuzeigen, bei dem die aus dem Stand der Technik bekannten Nachteile vermieden werden. Weiterhin soll eine Torsionsfederanordnung der eingangs beschriebenen Art aufgezeigt werden, die nach dem neuen Verfahren herstellbar ist und ihrerseits die Nachteile des Stands der Technik beseitigt.

Erfindungsgemäß wird diese Aufgabe bei einem Verfahren der eingangs beschriebenen Art dadurch gelöst, daß der Außendurchmesser des Rohrabschnitts zumindest über einen Teilbereich seiner Längserstreckung so auf den Innendurchmesser der Torsionsfeder abgestimmt wird, daß der minimale Innendurchmesser, den die Torsionsfeder in ihrer Verwendung erreicht, größer ist als der Außendurchmesser des Rohrabschnitts, daß der Rohrabschnitt coaxial in der Torsionsfeder angeordnet wird und daß in einen freien Ringraum zwischen der Torsionsfeder und dem darin coaxial angeordneten Rohrabschnitt mindestens eine Substanz eingebracht wird, die einen elastisch verformbaren Mantel um den Rohrabschnitt herum ausbildet, welcher von innen an der Torsionsfeder anliegt.

Im Vergleich zum Stand der Technik geht das neue Verfahren bewußt von einem in Bezug auf seinen Außendurchmesser untermaßigen Rohrabschnitt aus. Das heißt, zwischen dem Außendurchmesser des Rohrabschnitts und dem Innendurchmesser der Torsionsfeder verbleibt immer ein Raum, der gemäß dem neuen Verfahren jedoch nicht freigelassen wird. Vielmehr wird dieser Raum durch die coaxiale Anordnung des Rohrabschnitts in der Torsionsfeder zu einem möglichst rotationssymmetrischen Ringraum gemacht. Dann wird dieser Ringraum zwischen der Torsionsfeder und dem darin coaxial angeordneten Rohrabschnitt ausgefüllt. Dies geschieht unter Verwendung mindestens einer Substanz, die einen elastisch verformbaren Mantel um den Rohrabschnitt herum ausbildet, an dem sich die Torsionsfeder in radialer Richtung elastisch abstützt. Das heißt, bei Torsionsfederanordnungen, die nach dem neuen Verfahren hergestellt wurden, liegt die Torsionsfeder bei möglichst allen Innendurchmessern, den die Torsionsfeder in ihrer Verwendung erreicht, umlaufend an dem elastisch verformbaren Mantel an. Hierdurch wird nicht nur die Relativlage der Torsionsfeder zu der Trägerhülse optimal definiert, es werden auch Schwingungen des Federdrahts der Torsionsfeder gedämpft. Im Ergebnis ergeben sich aufgrund der Herstellung der Torsionsfederanordnung nach dem neuen Verfahren deutlich weniger ausgeprägte Verwerfungen und eine geringere Geräuschentwicklung.

Bei dem neuen Verfahren kann die Torsionsfeder vor dem Einbringen der Substanz in den Ringraum soweit zusammengedrückt werden, daß benachbarte Federwindungen aus dem Federstahldraht dichtend aneinanderliegen. Damit wird in aller Regel eine solche Abdichtung der Torsionsfeder in radialer Richtung erreicht, wie sie für die Durchführung des neuen Verfahrens notwendig ist. Das notwendige Maß der Abdichtung hängt aber stark von der jeweiligen Ausführungsform des neuen Verfahrens ab.

So kann vor dem Ausbilden des elastisch verformbaren, von innen an der Torsionsfeder anliegenden Mantels eine schlauchförmige Hülle in den Ringraum eingebracht werden. Diese schlauchförmige Hülle kann dann in dem Ringraum soweit aufgeweitet werden, daß sie sich von innen an die Torsionsfeder anlegt. Dies ist beispielsweise durch Aufblasen der schlauchförmigen Hülle möglich. Die schlauchförmige Hülle kann dabei nur die Oberfläche des elastischen Mantels oder aber Teile des elastischen Mantels oder gar den gesamten elastischen Mantel ausbilden.

Gerade im letzten Fall ist bei dem neuen Verfahren der dann verbleibende Ringraum zwischen der schlauchförmigen Hülle und dem Rohrabschnitt mit einer weiteren Substanz auszufüllen, die einen harten Mantel um den Rohrabschnitt ausbildet, um den elastischen Mantel nach innen abzustützen.

Dies ist eine Variante des allgemeineren Prinzips, welches bei dem neuen Verfahren zur Anwendung kommen kann, wonach zwei verschiedene Substanzen in den Ringraum eingebracht werden, wobei die eine den elastisch verformbaren Mantel und die andere einen harten Mantel zwischen dem Rohrabschnitt und dem elastisch verformbaren Mantel ausbildet. Zum Abschluß des neuen Verfahrens in dieser Ausführungsform ist es dann möglich, den Rohrabschnitt aus dem harten Mantel zu entfernen, so daß die Trägerhülse der Torsionsfederanordnung nur aus dem harten Mantel und dem elastischen Mantel besteht, während der Rohrabschnitt nur als Innenmatrize gedient hat.

Sofern eine der Substanzen nicht als oder auf einer schlauchförmigen Hülle in den Ringraum zwischen der Torsionsfeder und dem darin coaxial angeordneten Rohrabschnitt eingebracht wird, ist es bei dem neuen Verfahren bevorzugt, die Substanz in einer verdichteten Vorform in den Ringraum einzuspritzen und dann in dem Ringraum zu expandieren. Zur Ausbildung eines harten Mantels nach dieser Verfahrensvariante könnte beispielsweise auf üblichen Montageschaum, wie er zum Einbauen von Fenstern und Türen verwendet wird, zurückgegriffen werden. Es sind aber auch Substanzen für den elastischen Mantel in den Ringraum einspritzbar, wobei auf den in dieser Beziehung umfangreichen Stand der Technik zurückgegriffen werden kann.

Bei ihrer Verwendung, d. h. ihrer Beanspruchung auf Torsion, ändert die Torsionsfeder nicht nur ihren Innendurchmesser. Es tritt auch eine Torsion der gesamten Torsionsfeder verbunden mit einer Verdrehung der einzelnen Federwindungen des Federstahldrahts gegeneinander auf. Diese Bewegungen dürfen bei der Torsionsfederanordnung, die nach dem neuen Verfahren hergestellt wird, nicht behindert werden. Dem kann dadurch Rechnung getragen werden, daß eine schlauchförmige Hülle zur Ausbildung der Oberfläche des elastischen Mantels in dem Ringraum so ausgebildet ist, daß Gleitreibungskräfte zwischen der Trägerhülse und der Torsionsfeder minimiert werden. Mit demselben Ziel kann die Torsionsfeder vor dem Einbringen der Substanz, die den elastisch verformbaren Mantel um den Rohrabschnitt ausbildet, innen mit einem Trenn- und/oder Schmiermittel beschichtet werden. Das Trennmittel hat die Funktion, daß grundsätzlich keine Verklebung zwischen dem elastischen Mantel und der Torsionsfeder erfolgt. Das Schmiermittel setzt die Gleitreibung zwischen der Torsionsfeder und dem elastischen Mantel herab. Eine geringe Gleitreibung ist auch wichtig, um einen Abrieb des elastischen Mantels zu verhindern.

Zur praktischen Durchführung des neuen Verfahrens kann die Torsionsfeder zum Einbringen aller noch gestaltloser Substanzen in den Ringraum in eine Matrize eingebracht werden, die den Rohrabschnitt coaxial in der Torsionsfeder hält und die Federenden der Torsionsfeder abdichtet. Das Einbringen einer schlauchförmigen Hülle in den Ringraum kann vorher, beispielsweise zusammen mit dem Rohrabschnitt erfolgen.

Bei einer Torsionsfederanordnung der eingangs beschriebenen Art wird die erfindungsgemäße Aufgabe dadurch gelöst, daß der Außendurchmesser des harten Hülsenkerns zumindest über einen Teilbereich seiner Längserstreckung so auf den Innendurchmesser der Torsionsfeder abgestimmt ist, daß der minimale Innendurchmesser, den die Torsionsfeder in ihrer Verwendung erreicht, größer ist als der Außendurchmesser des Hülsenkerns und daß in einem Ringraum zwischen der Torsionsfeder und dem darin coaxial angeordneten Hülsenkern ein elastisch verformbarer Mantel um den Hülsenkern angordnet ist, welcher von innen an der Torsionsfeder anliegt.

Wie bereits im Zusammenhang mit dem neuen Verfahren erläutert, sorgt der elastisch verformbare Mantel zum einen für eine definierte Relativlage der Torsionsfeder zu dem untermaßigen Hülsenkern. Zum anderen wird auch eine Dämpfung von Schwingungen des Federstahldrahts erreicht.

Besonders bevorzugt sind Ausführungsformen der neuen Torsionsfederanordnung, bei denen die Torsionsfeder an ihren Federenden jeweils einen abnehmenden Innendurchmesser aufweist, wobei der Außendurchmesser des harten Hülsenkerns an den Federenden der Torsionsfeder ebenfalls abnimmt. Dies bedeutet, daß der harte Hülsenkern nicht nur reibschlüssig über den elastischen Mantel sondern seinerseits formschlüssig in der Torsionsfeder fixiert ist. Dennoch kann er nach dem neuen Verfahren nach dem Fertigwinden oder -wickeln der Torsionsfeder in der Torsionsfeder angeordnet werden.

In einer konkreten Ausführungsform der neuen Torsionsfederanordnung ist der Hülsenkern zumindest im Bereich seines Außendurchmessers aus einem Hartschaum und im Bereich des elastischen Mantels aus einem Weichschaum ausgebildet. Wenn der Rohrabschnitt nach dem Ausfüllen des Ringraums zwischen ihm und der Torsionsfeder wieder entfernt wird, kann auch der gesamte Hülsenkern aus dem Hartschaum bestehen.

Die Erfindung wird im folgenden anhang von Ausführungsbeispielen näher erläutert und beschrieben. Dabei zeigt
- Figur 1: eine in einer Ausspritzmatrize angeordnete Torsionsfeder bei der Herstellung der neuen Torsionsfederanordnung in einer erste Ausführungsfrom,
- Figur 2: eine Torsionsfeder bei der Herstellung der Torsionsfederanordnung in einer zweiten Ausführungsform,
- Figur 3: eine dritte Ausführungsform der Torsionsfeder und
- Figur 4: eine vierte Ausführungsform der Torsionsfeder.

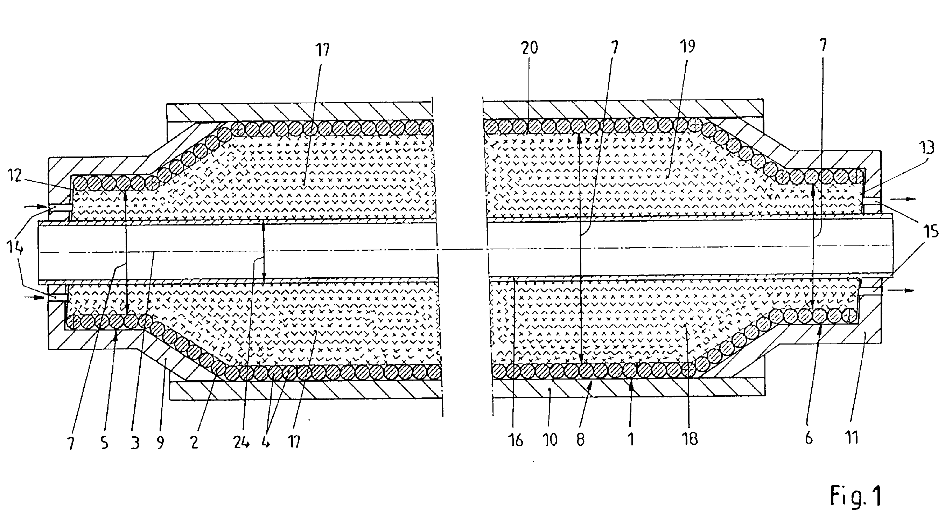

Figur 1 zeigt eine Torsionsfeder 1, die beispielsweise als Sektionaltorfeder, d. h. zum Gewichtsausgleich bei einem Sektionaltor verwendet werden kann. Die Torsionsfeder 1 ist aus Federstahldraht 2 ausgebildet, der in spiralförmig um eine Federachse 3 umlaufenden Federwindungen 4 angeordnet ist. Die Torsionsfeder 1 weist an den Federenden 5 und 6 einen kleineren Innendurchmesser 7 als in ihrem Zentralbereich 8 auf. Dabei ist der Innendurchmesser 7 der Federenden 5 und 6 auf hier nicht dargestellte Anschlußelemente abgestimmt, während der Innendurchmesser 7 des Zentralbereichs 8 auf die konkrete Beanspruchung der Torsionsfeder 1 abgestimmt ist. Die Torsionsfeder 1 ist hier in einer dreiteiligen Matrize 9 bis 11 angeordnet. Das Mittelstück 10 der Matrize ist zylindermantelförmig und nimmt den Zentralbereich 8 unter radialer Abstützung der Federwindungen 4 der Torsionsfeder 1 auf. Die Kopfteile 9 und 11 der Matrize drücken die Federenden 5 und 6 der Torsionsfeder 1 zusammen und dichten die Stirnseiten 12 und 13 der Torsionsfeder 1 bis auf Eispritzkanäle 14 in dem Kopfteil 9 und Entlüftungskanäle 15 in dem Kopfteil 11 ab. Dabei ist ein Rohrabschnitt 16 coaxial zu der Federachse 3 in der Torsionsfeder 1 angeordnet, der bis in die Kopfteile 9 und 11 der Matrize hinein oder sogar durch diese hindurch ragt. Zur Herstellung einer Torsionsfederanordnung wird der zunächst freie Ringraum 17 zwischen dem Innendurchmesser 7 der Torsionsfeder 1 und einem Außendurchmesser 24 des Rohrabschnitts 16 durch die Einspritzkanäle 14 mit einer Substanz 19 ausgespritzt, die in dem Ringraum 17 einen elastischen Schaum ausbildet. Der Schaum legt sich an die Federwindungen 4 an. Er verklebt aber nicht mit dem Federstahldraht 2, weil dieser vor dem Ausspritzen der Torsionsfeder 1 an der Innenseite der Torsionsfeder 1 mit einem Trenn- und Schmiermittel behandelt wurde. Während der Ringraum 17 ausgeschäumt wird, entweicht die in ihm enthaltene Luft durch die Entlüftungskanäle 15. Das Ausschäumen ist beendet, wenn der Schaum aus den Entlüftungskanälen 15 austritt. Nachdem der Schaum 18 so weit ausgehärtet ist, daß er zwar einen elastischen aber ansich formstabilen Mantel 18 um den Rohrabschnitt 16 herum ausbildet, kann die Torsionsfederanordnung mit der Torsionsfeder 1 und der aus dem Rohrabschnitt 16 und dem elastischen Mantel 18 gebildeten Trägerhülse aus der Matrize 9 bis 11 entformt werden. Jetzt besteht keine Gefahr, daß die Trägerhülse die sowohl kraft- als auch formschlüssig in der Torsionsfeder 1 verankert ist, aus der Torsionsfeder 1 herausfällt. Bei der Beanspruchung der Torsionsfeder 1 auf Torsion ändert sich ihr Innendurchmesser 7, und aufgrund ihrer Torsion verdrehen sich die einzelnen Federwindungen 4 gegeneinander. Die Durchmesseränderung des Innendurchmessers 7 wird durch elastische Verformung des Mantels 18 kompensiert, wobei der Mantel 18 mit seiner Oberfläche 20 ständig an den Federwindungen 4 des Federstahldrahts 2 anliegt. Während der relativen Verdrehungen der Federwindungen 4 um die Federachse 3 gleitet der Federstahldraht 2 über die Oberfläche 20 des elastischen Mantels 18 ab, wobei das Trenn- und Schmiermittel die Reibung soweit reduziert, daß die Funktion der Torsionsfeder 1 nicht nennenswert beeinträchtigt wird. Dies gilt auch für den Einfluß der elastischen Verformung des Mantels 18 auf die Funktion der Torsionsfeder 1. Bei der Torsionsfederanordnung, die gemäß Figur 1 hergestellt wurde, besteht keine Gefahr von Verwerfungen der auf Torsion beanspruchten Torsionsfeder 1, da diese auf der Trägerhülse 16, 18 definiert geführt wird. Darüberhinaus bewirkt die Ankopplung des elastischen Mantels 18 an die Torsionsfeder 1 eine Dämpfung von Schwingungen des Federstahldrahts 2 und damit eine Unterdrückung von Geräuschentwicklungen.

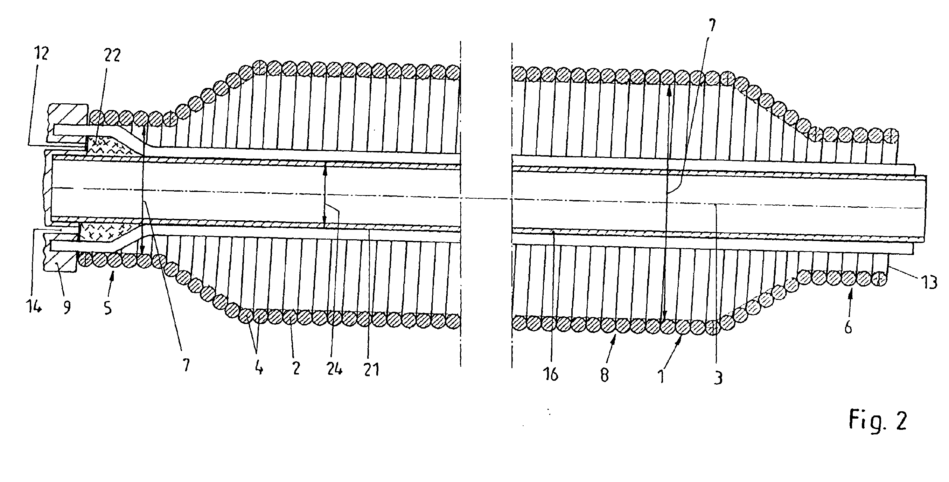

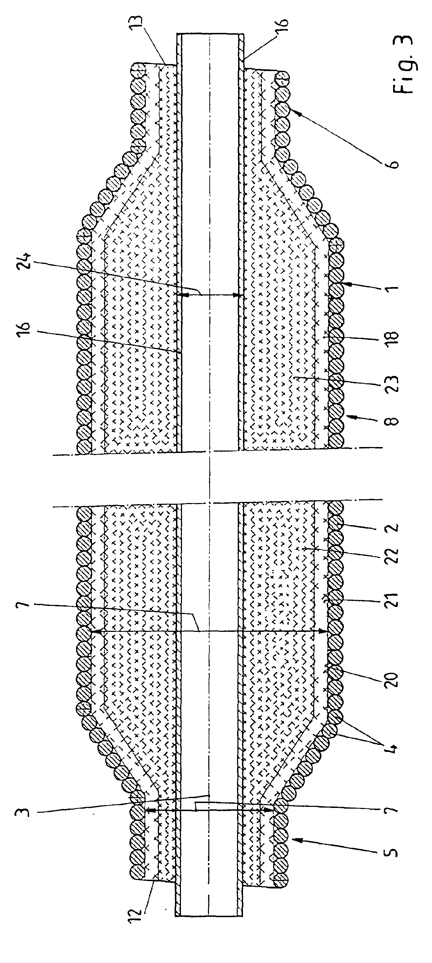

Gemäß Figur 2 wird eine Trägerhülse für die Torsionsfeder 1 innerhalb der Torsionsfeder 1 dadurch ausgebildet, daß auf dem Rohrabschnitt 16, der coaxial zu der Federachse 3 in der Torsionsfeder 1 angeordnet wird, eine schlauchförmige Hülle 21 angeordnet ist. Die schlauchförmige Hülle 21 besteht aus elastisch verformbarem Material. Anschließend wird die schlauchförmige Hülle 21 über die Einspritzkanäle 14 des Kopfstücks 9, das hier als einziges von der Matrize 9 bis 11 dargestellt ist, ausgespritzt, wobei sich die schlauchförmige Hülle von innen an die Torsionsfeder 1 anlegt. Die dabei zum Ausspritzen der Hülle 21 verwendete Substanz 22 bildet einen harten Schaum aus. Im Ergebnis wird so die Torsionsfederanordnung 22 gemäß Figur 3 erhalten. Diese besteht aus der Torsionsfeder 1 und einer Trägerhülse, die von innen her betrachtet aus dem Rohrabschnitt 16, dann einem harten Mantel 23 um den Rohrabschnitt 16 und letztlich aus dem elastischen Mantel 18 um den harten Mantel 23 herum besteht, wobei der harte Mantel 23 aus der Substanz 24 und der elastische Mantel 18 von der Hülle 21 ausgebildet wird. Dabei kann die Oberfläche 20 der Hülle 21 bzw. des elastischen Mantels 18 ihrerseits so ausgebildet sein, daß möglichst geringe Gleitreibungskräfte zwischen ihr und dem Federstahldraht 2 auftreten.

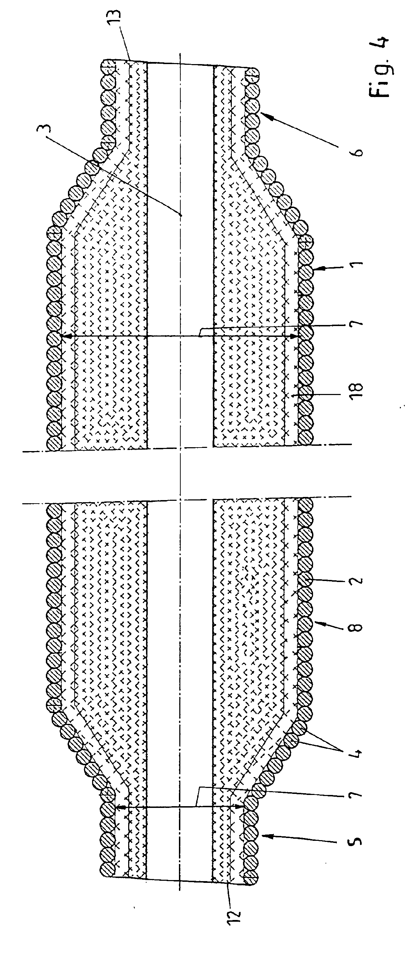

Eine weitere Ausführungsform der Torsionsfederanordnung 22 ist in Figur 4 gezeigt. Diese Unterscheidet sich von derjenigen gemäß Figur 3 dadurch, daß ein harter Kern der Trägerhülse für die Torsionsfeder nur den harten Mantel 23 aber nicht den Rohrabschnitt 16 umfaßt. Vielmehr ist der Rohrabschnitt 16 hier herausgezogen worden. Das heißt, er hat nur als Teil der Matrize zum Ausspritzen der Torsionsfeder 1 gedient. Dabei muß der Rohrabschnitt natürlich keine durchgehende zentrale Öffnung obder überhaupt eine Ausnehmung im Zentrumsbereich aufweisen. Er kann vielmehr auch ein massiver Stab sein.

Die neue Torsionsfederanordnung bzw. das Verfahren zu ihrer Herstellung sind auch auf zylindrische Torsionsfedern 1 anwendbar, wobei der Ringraum innerhalb der Torsionsfeder seinerseits zylindrisch und damit geometrisch einfacher gestaltet ist, was sich in Kostenvorteilen niederschlagen kann. In jedem Fall muß zwischen dem Außendurchmesser 24 des Rohrabschnitts 16 und dem Innendurchmesser 7 der Torsionsfeder 1 bei coaxialer Anordnung des Rohrabschnitts 16 in der Torsionsfeder 1 der Ringraum 17 vorliegen, in den eine Substanz zur Ausbildung eines elastischen Mantels 18 und eine Substanz zum Ausschäumen des Ringraums von innen eingebracht werden können. Dabei kann es sich insgesamt um nur eine Substanz handeln. Bei Verwendung von zwei unterschiedlichen Substanzen können beide Substanzen in den Ringraum 17 eingeschäumt werden. Es ist aber auch möglich, nur eine Substanz einzuschäumen, dies entspricht dem Ausführungsbeispiel gemäß Figur 2.

### BEZUGSZEICHENLISTE

- 1 -: Torsionsfeder
- 2 -: Federstahldraht
- 3 -: Federachse
- 4 -: Federwindung
- 5 -: Federende
- 6 -: Federende
- 7 -: Innendurchmesser
- 8 -: Zentralbereich
- 9 -: Kopfteil
- 10 -: Mittelstück

- 11 -: Kopfteil
- 12 -: Stirnseite
- 13 -: Stirnseite
- 14 -: Einspritzkanal
- 15 -: Entlüftungskanal
- 16 -: Rohrabschnitt
- 17 -: Ringraum
- 18 -: elastischer Mantel
- 19 -: Substanz
- 20 -: Oberfläche

- 21 -: Hülle
- 22 -: Torsionsfederanordnung
- 23 -: harter Mantel
- 24 -: Außendurchmesser

## Patentansprüche

1. Verfahren zur Herstellung einer Torsionsfederanordnung mit einer langgestreckten, aus Federstahldraht gewickelten oder gewundenen und eine hohe Windungszahl aufweisenden Torsionsfeder und einer in dem freien Querschnitt der Torsionsfeder angeordneten Trägerhülse für die Torsionsfeder zur Unterdrückung von Verwerfungen der auf Torsion beanspruchten Torsionsfeder, wobei ein Rohrabschnitt in die Torsionsfeder eingebracht wird, **dadurch gekennzeichnet,** daß der Außendurchmesser (24) des Rohrabschnitts (16) zumindest über einen Teilbereich seiner Längserstreckung so auf den Innendurchmesser (7) der Torsionsfeder (1) abgestimmt wird, daß der minimale Innendurchmesser, den die Torsionsfeder in ihrer Verwendung erreicht, größer ist als der Außendurchmesser (24) des Rohrabschnitts (16), daß der Rohrabschnitt (16) coaxial in der Torsionsfeder (1) angeordnet wird und daß in einen freien Ringraum (17) zwischen der Torsionsfeder (1) und dem darin coaxial angeordneten Rohrabschnitt (16) mindestens eine Substanz (19, 21) eingebracht wird, die einen elastisch verformbaren Mantel (18) um den Rohrabschnitt (16) herum ausbildet, welcher von innen an der Torsionsfeder (1) anliegt.

2. Verfahren nach Anspruch 1, **dadurch gekennzeichnet,** daß die Torsionsfeder (1) vor dem Einbringen der Substanz (19, 21) in den Ringraums (17) soweit in Richtung ihrer Federachse (3) zusammengedrückt wird, daß benachbarte Federwindungen (4) aus dem Federstahldraht (2) dichtend aneinander liegen.

3. Verfahren nach Anspruch 1 oder 2, **dadurch gekennzeichnet,** daß vor dem Ausbilden des elastisch verformbaren, von innen an der Torsionsfeder (1) anliegenden Mantels (18) eine schlauchförmige Hülle (21) in den Ringraum (17) eingebracht wird.

4. Verfahren nach einem der Ansprüche 1 bis 3, **dadurch gekennzeichnet,** daß zwei verschiedenen Substanzen (19, 21, 22) in den Ringraum (17) eingebracht werden, wobei die eine den elastisch verformbaren Mantel (18) und die andere einen harten Mantel (23) zwischen dem Rohrabschnitt (16) und dem elastisch verformbaren Mantel (18) ausbildet.

5. Verfahren nach einem der Ansprüche 1 bis 4, **dadurch gekennzeichnet,** daß mindestens eine der Substanzen (18, 22) in einer verdichteten Vorform in den Ringraum (17) eingespritzt und in dem Ringraum (17) expandiert wird.

6. Verfahren nach einem der Ansprüche 1 bis 4, **dadurch gekennzeichnet,** daß die Torsionsfeder (1) vor dem Einbringen der Substanz (19, 21), die den elastisch verformbaren Mantel um den Rohrabschnitt (16) ausbildet, innen mit einem Trenn- und/oder Schmiermittel beschichtet wird.

7. Verfahren nach einem der Ansprüche 1 bis 6, **dadurch gekennzeichnet,** daß die Torsionsfeder (1) zum Einbringen aller noch gestaltloser Substanzen (19, 22) in den Ringraum (17) in eine Matrize (9-11) eingebracht wird, die den Rohrabschnitt (16) coaxial in der Torsionsfeder (1) hält und Stirnflächen (12, 13) an den Federenden (5, 6) der Torsionsfeder (1) abdichtet.

8. Torsionsfederanordnung mit einer langgestreckten, aus Federstahldraht gewickelten oder gewundenen und eine hohe Windungszahl aufweisenden Torsionsfeder und einer in dem freien Querschnitt der Torsionsfeder angeordneten Trägerhülse für die Torsionsfeder zur Unterdrückung von Verwerfungen der auf Torsion beanspruchten Torsionsfeder, wobei die Trägerhülse einen harten Hülsenkern aufweist, **dadurch gekennzeichnet,** daß der Außendurchmesser des harten Hülsenkerns zumindest über einen Teilbereich seiner Längserstreckung so auf den Innendurchmesser (7) der Torsionsfeder (1) abgestimmt ist, daß der minimale Innendurchmesser, den die Torsionsfeder (1) in ihrer Verwendung erreicht, größer ist als der Außendurchmesser des Hülsenkerns und daß in einem Ringraum zwischen der Torsionsfeder und dem darin coaxial angeordneten Hülsenkern ein elastisch verformbarer Mantel (18) um den Hülsenkern angeordnet ist, welcher von innen an der Torsionsfeder (1) anliegt.

9. Torsionsfederanordnung nach Anspruch 8, **dadurch gekennzeichnet,** daß die Torsionsfeder (1) zu ihren Federenden (5, 6) hin jeweils einen abnehmenden Innendurchmesser (7) aufweist, wobei der Außendurchmesser des harten Hülsenkerns zu den Federenden (5, 6) der Torsionsfeder (1) hin ebenfalls abnimmt.

10. Torsionsfederanordnung nach Anspruch 8 oder 9, **dadurch gekennzeichnet,** daß der Hülsenkern zumindest im Bereich seines Außendurchmessers aus einem Hartschaum und der elastische Mantel (18) aus einem Weichschaum ausgebildet ist.
